# EUROPÄISCHE PATENTANMELDUNG

(11) **EP 3 996 274 A1**
(43) Veröffentlichungstag der Anmeldung: **11.05.2022**
(21) Anmeldenummer: 20205978.8
(22) Anmeldetag: 05.11.2020
(51) Int. Cl.: H02P 29/032

(54) **VERFAHREN UND SYSTEM ZUR STEUERUNG EINER ELEKTRISCHEN MASCHINE**

(71) Anmelder: Siemens Aktiengesellschaft, 80333 München (DE)
(72) Erfinder: Nolting, Christoph, 91315 Höchstadt/Aisch (DE); Scheibner, Dirk, 90473 Nürnberg (DE); Schwaben, Markus, 97618 Hohenroth-Leutershausen (DE); Zettner, Jürgen, 90587 Veitsbronn (DE); Böhling, Jürgen, 85221 Dachau (DE); Mueller, Juergen, 97490 Poppenhausen (DE)

(57) **Zusammenfassung**

Die Erfindung betrifft ein Verfahren zur Steuerung einer elektrischen Maschine (3), insbesondere dynamoelektrischen Maschine, mit folgenden Schritten: Ermitteln eines Umgebungsluftdrucks der elektrischen Maschine (3) mittels einer Vorrichtung zur Luftdruckbestimmung (11, 15); Anpassen einer Leistung der elektrischen Maschine (3) in Abhängigkeit des Umgebungsluftdrucks. Die Erfindung betrifft ferner ein System (1) zur Steuerung einer elektrischen Maschine (3), insbesondere dynamoelektrischen Maschine, aufweisend: eine elektrische Maschine (3), insbesondere dynamoelektrische Maschine; eine Vorrichtung zur Luftdruckbestimmung, eine Funktion zur Anpassung einer Leistung der elektrischen Maschine (3).

## Beschreibung

Die Erfindung betrifft ein Verfahren und ein System zur Steuerung einer elektrischen Maschine.

Elektrische Antriebe, zumeist aufweisend einen Umrichter und eine dynamoelektrische Maschine, sind überwiegend für maximale Aufstellungshöhen von 2000 m MSL konzipiert. Ist eine Aufstellung des Antriebs in größeren Höhen geplant, erfolgt oft ein Derating einer Leistung des Antriebs. Jedoch muss hierbei während einer Projektierung die Aufstellungshöhe bekannt sein.

Es besteht jedoch die Gefahr, dass die Aufstellungshöhe nicht korrekt angegeben wird oder nachträglich verändert wird.

Dies kann sich jedoch nachteilig auf eine Kühlung des Antriebs, insbesondere der Maschine, auswirken und so zu einem Ausfall führen.

Der Erfindung liegt daher die Aufgabe zugrunde, dies zu verbessern.

Die Lösung der Aufgabe gelingt durch Anspruch 1, d. h. ein Verfahren zur Steuerung einer elektrischen Maschine, insbesondere, dynamoelektrischen Maschine, mit folgenden Schritten:
- Ermitteln eines Umgebungsluftdrucks der elektrischen Maschine mittels einer Vorrichtung zur Luftdruckbestimmung,
- Anpassen einer Leistung der elektrischen Maschine in Abhängigkeit des Umgebungsluftdrucks.

Das Anpassen der Leistung gelingt vorteilhaft mittels einer Belastungskurve und/oder mittels einer Kennlinie und/oder mittels einer Tabelle. Auch andere Formen, die die Leistung mit dem Umgebungsluftdruck in Relation setzen, sind möglich.

Die Erfindung eignet sich besonders gut für dynamoelektrische Maschinen. Jedoch kann die Erfindung auch bei Transformatoren angewendet werden.

Vorzugsweise wird hierbei ein aktueller Umgebungsluftruck ermittelt.

Vorzugsweise werden ein Drehmoment und/oder eine Drehzahl der Maschine angepasst.

Vorteilhaft ist eine Ausführungsform, wonach der Umgebungsluftdruck durch Ermittlung einer Höhenlage bestimmt wird.

Vorteilhaft ist zudem eine Ausführungsform, wonach die Höhenlage mittels eines Höhenmessers oder durch ein globales Navigationssatellitensystem bestimmt wird.

Der Höhenmesser ist hierbei bevorzugt ein barometrischer Höhenmesser. Ferner kann die Höhenlage auch anders bestimmt werden.

Globale Navigationssatellitensysteme sind z. B. NAVSTAR GPS der Vereinigten Staaten von Amerika, GLONASS der Russischen Föderation, Galileo der Europäischen Union und Beidou der Volksrepublik China. Auch andere sind denkbar.

Das globale Navigationssatellitensystem stellt hierbei vorteilhaft zur Bestimmung der Höhenlage eine Information bezüglich einer Position auf der Erdkugel und/oder eine Information bezüglich einer Höhe über dem Meeresspiegel bereit.

Vorteilhaft ist zudem eine Ausführungsform, wonach der Umgebungsluftdruck gemessen wird, insbesondere mittels eines Barometers.

Ein Barometer ist ein Messgerät zur Bestimmung eines statischen Absolut-Luftdrucks.

Vorteilhaft ist zudem eine Ausführungsform, wonach eine Umgebungsluftströmung ermittelt wird.

Dies gelingt beispielsweise mittels eines Strömungssensors. Dieser kann einen Luftstrom, insbesondere in Kanälen und an schwer zugänglichen Positionen, messen. Es können wechselnde Strömungsrichtungen oder gerichtete Strömungen erfasst werden.

Es eignet sich mitunter ein Thermoanemometersensor. Auch andere sind denkbar.

Die Umgebungsluftströmung kann ferner auch mit einem Flügelrad-Sensor gemessen werden. Flügelrad-Sensoren können die Luftströmung messen, insbesondere an Auslässen oder auch in Kanälen.

Vorteilhaft ist zudem eine Ausführungsform, wonach eine Umgebungsluftfeuchtigkeit ermittelt wird.

Dies gelingt vorteilhaft mittels eines Feuchtigkeitsmessers. Dieser ist vorteilhaft geeignet, einen Feuchtegehalt in der Luft oder Feststoffen zu messen.

Die Umgebungsluftfeuchtigkeit wird vorzugsweise mit einem Hygrometer ermittelt.

Vorteilhaft ist zudem eine Ausführungsform, wonach eine Umgebungstemperatur ermittelt wird. Hierfür eignet sich z. B. ein Temperatursensor.

Für den Betrieb der Maschine ist von Vorteil, die genauen Umgebungsbedingungen zu kennen. Hierzu zählen die genannten Umgebungsbedingungen wie Umgebungsluftdruck, Umgebungsluftfeuchtigkeit und Umgebungsluftströmung. Ferner ist auch eine Kenntnis über ein Vorhandensein von bestimmten Gasen, insbesondere Schadgasen.

Ein - im Vergleich zu Standardbedingungen - niedrigerer Umgebungsluftdruck reduziert die Kühlung der Maschine, was zu einer Überhitzung führen kann.

Eine hohe Umgebungsluftfeuchtigkeit, auch mit der Gefahr einer Betauung, kann die Funktion eines, z. B. optischen, Gebers beeinträchtigen. Dies kann dazu führen, dass eine Bereitstellung einer Drehzahl-, Kommutierungs- und/oder Lageinformation nicht zuverlässig erfolgt.

Ferner können Schadgase eine Lebensdauer von Isolierstoffen oder Permanentmagneten begrenzen.

In der Maschine, insbesondere in einer Wicklung der Maschine, kann ferner ein weiterer Temperatursensor angeordnet sein.

Vorteilhaft ist zudem eine Ausführungsform, wonach die Leistung der elektrischen Maschine abhängig vom Umgebungsluftdruck und/oder von der Umgebungsluftströmung und/oder von der Umgebungsluftfeuchtigkeit und/oder von der Umgebungstemperatur angepasst wird.

Dies gelingt vorteilhaft dadurch, dass durch die Belastungskurve bzw. Kennlinie bzw. Tabelle die Leistung der elektrischen Maschine mit dem Umgebungsluftdruck und/oder mit der Umgebungsluftströmung und/oder mit der Umgebungsluftfeuchtigkeit und/oder mit der Umgebungstemperatur in Beziehung gesetzt wird.

Vorteilhaft ist zudem eine Ausführungsform, wonach eine Leistung der elektrischen Maschine (3) in Abhängigkeit des Umgebungsluftdrucks und/oder der Umgebungsluftströmung und/oder der Umgebungsluftfeuchtigkeit und/oder der Umgebungstemperatur reduziert wird.

Die Erfindung bietet den Vorteil, dass Kenntnis über die Aufstellungshöhe erlangt wird. Da mit zunehmender Höhe der Luftdruck sowie die Luftdichte sinken, ist mit einer Verschlechterung von Kühleigenschaften und somit einer Überhitzung der Maschine zu rechnen. Darauf kann durch die Erfindung reagiert werden, wodurch ein Schaden der Maschine und/oder ein Ausfall der Maschine vermieden werden kann.

Die Erfindung bietet zudem den Vorteil, dass wetterbedingte Druckschwankungen berücksichtigt werden können.

Ferner nimmt mit zunehmender Höhe eine kosmische Höhenstrahlung zu, was insbesondere für den Betrieb von Leistungshalbleitern wichtig ist. Die Höhenstrahlung hängt dabei neben der Höhe über dem Meeresspiegel auch von einer geografischen Breite ab. Zusätzlich erhöht sich in größerer Höhe die Gefahr für Teilentladungen.

Diese Effekte können durch die Erfindung berücksichtigt werden, da die Leistung der Maschine bedarfsgerecht angepasst werden kann.

Die Lösung der oben gestellten Aufgabe gelingt ferner durch Anspruch 10, d. h. ein System zur Steuerung einer elektrischen Maschine, insbesondere dynamoelektrischen Maschine, insbesondere zur Durchführung eines derartigen Verfahrens, aufweisend:
- eine elektrische Maschine, insbesondere dynamoelektrische Maschine,
- eine Vorrichtung zur Luftdruckbestimmung,
- eine Funktion zur Anpassung einer Leistung der elektrischen Maschine.

Vorteilhaft ist eine Ausführungsform, wonach das System einen Höhenmesser aufweist.

Vorzugsweise wird die Höhe barometrisch, mittels Schall, Laser und/oder Mikrowelle gemessen.

Vorteilhaft ist zudem eine Ausführungsform, wonach das System einen Empfänger zum Empfang einer Information von einem globalen Navigationssatellitensystem aufweist.

Auf diese Weise kann zuverlässig eine Information bezüglich einer Position auf der Erdkugel und/oder bezüglich einer Höhe über dem Meeresspiegel bezogen werden. Auch andere sind denkbar.

Vorteilhaft ist zudem eine Ausführungsform, wonach das System eine Messvorrichtung zur Messung des Umgebungsluftdrucks aufweist.

Hierzu eignet sich besonders gut ein Barometer.

Vorteilhaft ist zudem eine Ausführungsform, wonach das System eine Messvorrichtung zur Messung einer Umgebungsluftströmung aufweist.

Vorteilhafte Messvorrichtungen sind bereits weiter oben beschrieben.

Vorteilhaft ist zudem eine Ausführungsform, wonach das System eine Messvorrichtung zur Messung einer Umgebungsluftfeuchtigkeit aufweist.

Dies ist beispielsweise ein Hygrometer.

Vorteilhaft ist zudem eine Ausführungsform, wonach das System eine Messvorrichtung zur Messung einer Umgebungstemperatur aufweist.

Vorteilhaft ist zudem eine Ausführungsform, wonach die Messvorrichtung zur Messung eines Umgebungsluftdrucks und/oder die Messvorrichtung zur Messung einer Umgebungsluftströmung und/oder die Messvorrichtung zur Messung einer Umgebungsluftfeuchtigkeit und/oder die Messvorrichtung zur Messung einer Umgebungstemperatur wenigstens einen MEMS-Baustein aufweist.

MEMS (Microelektromechanisches System) sind kleine Bauelemente oder Bausteine, die Logikelemente und mikromechanische Strukturen in einem Chip, insbesondre Halbleiterchip, vereinen. Sie können mechanische und/oder elektrische Informationen verarbeiten. MEMS weisen vorteilhaft Silicium auf. Jedoch sind auch andere in der Halbleitertechnik übliche Materialien denkbar.

Strukturen der MEMS können kleiner als ein Mikrometer sein. Dank der Miniaturisierung lassen sie sich wie Halbleiter billig und in Massen fertigen.

MEMS sind zudem robust und zuverlässig. Zudem sind eine geringe Baugröße, ein geringer Preis und ein niedriger Energiebedarf vorteilhaft.

Es ist zudem denkbar, dass anstelle von MEMS oder zusätzlich NEMS (Nanoelektromechanisches System) eingesetzt werden.

Für die oben angeführten Umgebungsbedingungen sind in den Projektierungsvorschriften des Motors Anweisungen enthalten. So gibt es zum Beispiel Angaben für ein Leistungs-Derating in Abhängigkeit der Aufstellhöhe des Motors.

Die Erfindung ist von Vorteil, da ein mit zunehmender Höhe über dem Meeresspiegel ein Atmosphärendruck nach der barometrischen Höhenformel abnimmt. Es muss nicht überwacht werden, ob die bei einer Projektierung angegeben Aufstellhöhe tatsächlich eingehalten wird.

Zudem können auch wetterbedingte Druckschwankungen berücksichtigt werden.

Die Maschine kann so besser ausgenutzt werden.

Im Folgenden wird die Erfindung anhand der in den Figuren dargestellten Ausführungsbeispiele näher beschrieben und erläutert. Es zeigen:
- FIG 1: einen beispielhaften Ablauf des erfindungsgemäßen Verfahrens zur Steuerung einer elektrischen Maschine, insbesondere dynamoelektrischen Maschine,
- FIG 2: eine mögliche Ausführung des erfindungsgemäßen Systems,
- FIG 3: eine weitere mögliche Ausführung des erfindungsgemäßen Systems,
- FIG 4: eine beispielhafte Belastungskurve.

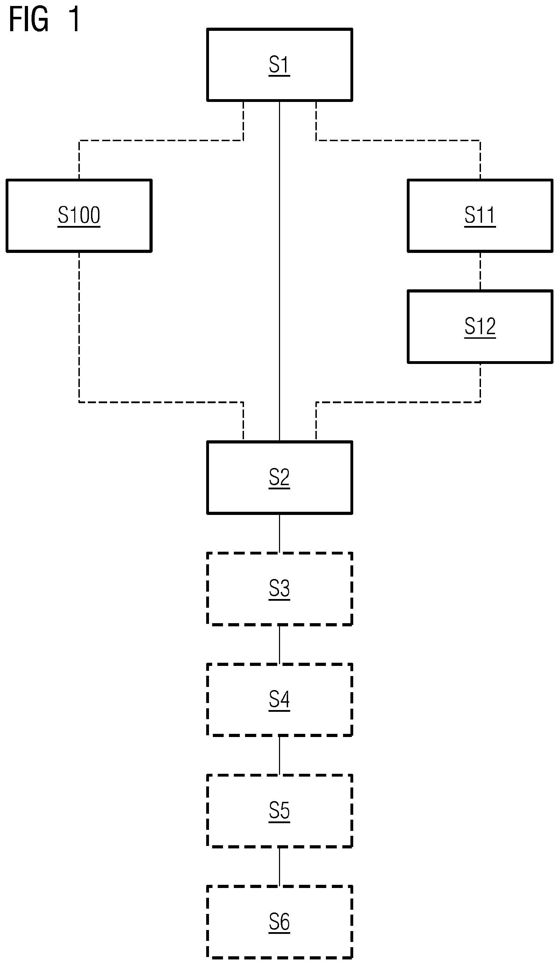

FIG 1 zeigt einen beispielhaften Ablauf des erfindungsgemäßen Verfahrens zur Steuerung einer elektrischen Maschine, insbesondere dynamoelektrischen Maschine.

In einem Verfahrensschritt S1 erfolgt eine Ermittlung eines Umgebungsluftdrucks der elektrischen Maschine mittels einer Vorrichtung zur Luftdruckbestimmung. Vorteilhaft wird der aktuelle, an einem Aufstellort der elektrischen Maschine vorliegende Umgebungsluftdruck ermittelt.

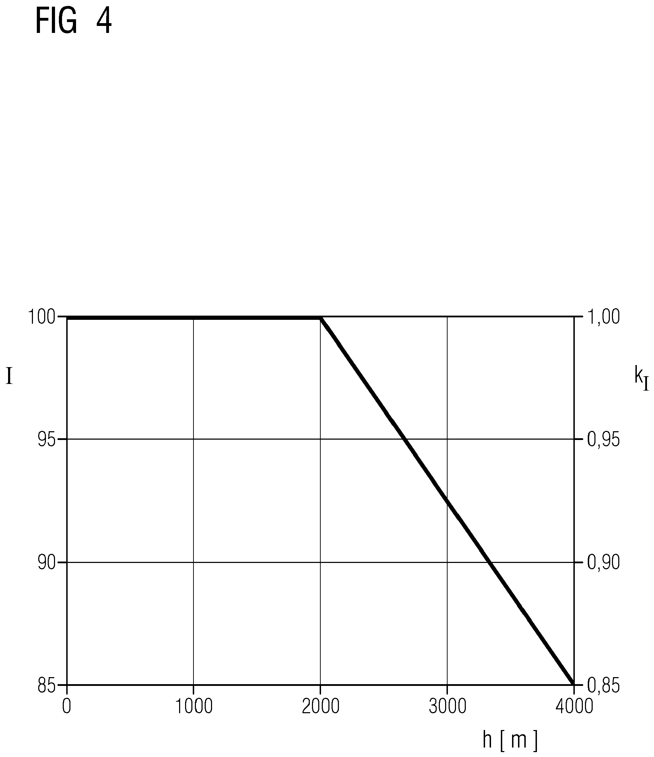

In einem Verfahrensschritt S2 wird eine Leistung der elektrischen Maschine, z. B. anhand einer Belastungskurve (siehe FIG 4), insbesondere an vorliegende Umgebungsbedingungen, angepasst.

Anstelle der Belastungskurve kann auch eine Kennlinie, Tabelle, etc. angewendet werden.

Die Umgebungsbedingungen sind neben dem bereits erläuterten Umgebungsluftdruck vorteilhaft eine Umgebungsluftströmung und/oder eine Umgebungsluftfeuchtigkeit und/oder eine Umgebungstemperatur.

Ferner können auch Gase, insbesondere Schadgase, detektiert werden.

Die Ermittlung des Umgebungsluftdrucks gelingt z. B. durch die Verfahrensschritte S11 und S12, wonach in Verfahrensschritt S11 eine Höhenlage der elektrischen Maschine mittels eines Höhenmessers oder durch ein globales Navigationssatellitensystem bestimmt wird. In Verfahrensschritt S12 erfolgt eine Bestimmung des Umgebungsluftdrucks auf Basis der Höhenlage.

Ein Luftdruck in einer Höhe ist im Wesentlichen konstant über die Erdkugel. Bei der Ermittlung der Höhenlage durch ein globalen Navigationssatellitensystem wird vorteilhaft ein Standort ermittelt und daraus auf den Aufstellort und die Höhenlage geschlossen.

Die Ermittlung des Umgebungsluftdrucks gelingt z. B. auch durch einen Verfahrensschritt S100, wonach der Umgebungsluftdruck gemessen wird, insbesondere mittels eines Barometers.

In einem Verfahrensschritt S3 wird eine Umgebungsluftströmung ermittelt.

In einem Verfahrensschritt S4 wird eine Umgebungsluftfeuchtigkeit ermittelt.

In einem Verfahrensschritt S5 wird eine Umgebungstemperatur ermittelt.

In einem Verfahrensschritt S6 wird die Leistung der elektrischen Maschine anhand der Belastungskurve reduziert.

Durch die beispielhafte Belastungskurve oder andere Formen wird die Leistung der elektrischen Maschine mit dem Umgebungsluftdruck und/oder mit der Umgebungsluftströmung und/oder mit der Umgebungsluftfeuchtigkeit und/oder mit der Umgebungstemperatur in Beziehung gesetzt.

Ferner ist eine Detektion von Gasen möglich. Dies sind vorzugsweise alkalische Gase und/oder saure Gase, wie beispielsweise Ammoniak, Säurenebel und Schwefelsäure.

Auch saurer Regen kann detektiert werden.

Denkbar ist hierbei eine Ausgabe einer Warnung.

Die Bestimmung der genannten Größen ist von Vorteil, da diese zu einer Beschädigung des Systems führen können.

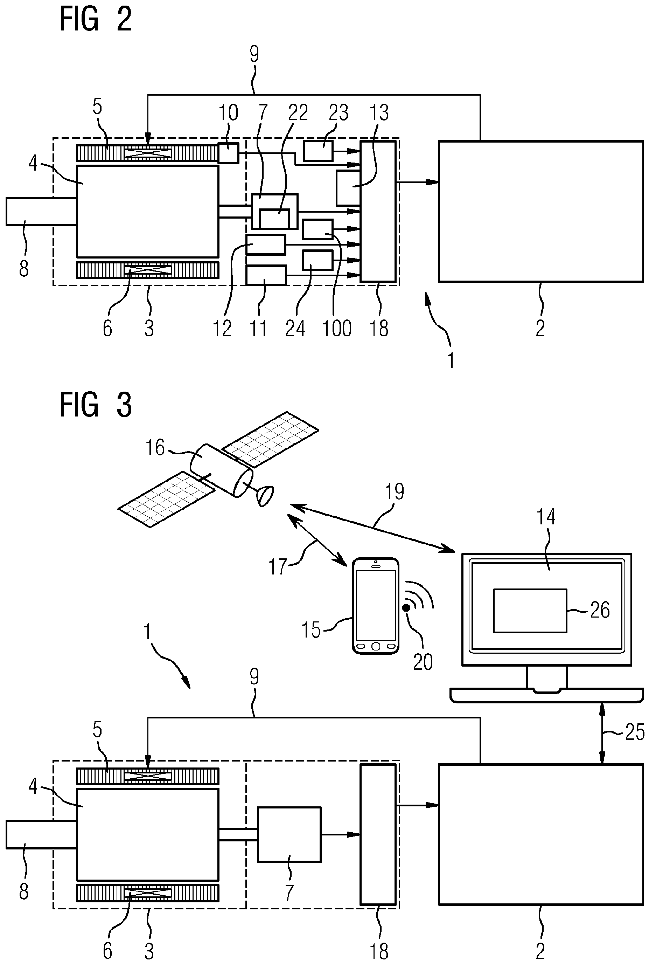

FIG 2 zeigt eine mögliche Ausführung des erfindungsgemäßen Systems 1.

Die Figur zeigt einen Umrichter 2 sowie eine dynamoelektrische rotatorische Maschine 3. Diese Ausführung ist bevorzugt, jedoch eignet sich die Erfindung auch für Linearantriebe oder Transformatoren.

Der Umrichter 2 weist vorteilhaft eine Steuereinheit auf oder ist mit einer Steuereinheit verbunden.

Eine Funktion zur Anpassung der Leistung der elektrischen Maschine 3, z. B. anhand der Belastungskurve, ist vorteilhaft im Umrichter 2 bzw. der Steuereinheit vorhanden.

In der Funktion sind vorteilhaft Steuerungs- und/oder Regelungsalgorithmen umfasst, die eine Anpassung, insbesondere ein Derating, ermöglichen.

Die abgebildete Maschine 3 weist einen Rotor 4 und einen Stator 5 auf. Der Stator weist ein Wicklungssystem 6 auf.

Das System 1 weist einen Positionssensor 7 auf, welcher an einer Welle 8 angeordnet ist. Der Positionssensor 7 ist z. B. ein Geber oder in einem Geber integriert. Der Geber ist vorteilhaft ein Drehgeber oder Winkelgeber.

Der Positionssensor weist vorteilhaft einen MEMS-Baustein 12 auf.

Die Figur zeigt, dass die Maschine 3, insbesondere das Wicklungssystem 6, vom Umrichter 2 mit elektrischer Energie gespeist wird (dargestellt durch Pfeil 9).

Die Figur zeigt einen Höhenmesser 100.

Am Stator 5 ist ein Temperatursensor 10 angeordnet. Dieser ist vorteilhaft zur Erfassung einer Temperatur des Wicklungssystems 6 ausgebildet.

Die Figur zeigt eine Messvorrichtung zur Messung des Umgebungsluftdrucks 11. Die Messvorrichtung 11 weist vorteilhaft einen MEMS-Baustein auf.

Die Figur zeigt eine Messvorrichtung zur Messung der Umgebungsluftfeuchtigkeit 13. Die Messvorrichtung 13 weist vorteilhaft einen MEMS-Baustein auf.

Die Figur zeigt eine Messvorrichtung zur Messung des Umgebungsluftströmung 22. Die Messvorrichtung 22 weist vorteilhaft einen MEMS-Baustein auf.

Die Figur zeigt eine Messvorrichtung zur Messung der Umgebungstemperatur 23. Die Messvorrichtung 23 weist vorteilhaft einen MEMS-Baustein auf.

Die Figur zeigt eine Messvorrichtung zur Messung von Gasen 24. Die Messvorrichtung 24 weist vorteilhaft einen MEMS-Baustein auf.

Die beschriebenen Messvorrichtungen sind beispielsweise als Sensoren ausgebildet. Sie können auf einer Leiterplatte 18, insbesondere als Printed Circuit Board (kurz: PCB) ausgebildet, angeordnet sein. Ferner können sie auch zur Leiterplatte 18 beabstandet angeordnet sein. Vorteilhaft sind sie jedoch zur Übermittlung von Informationen an die Leiterplatte 18 ausgebildet.

Die Leiterplatte 18 dient als Schnittstelle und ist vorteilhaft zur Weitergabe von Informationen an den Umrichter 2 bzw. die Steuereinheit ausgebildet.

Es ist zudem möglich, die beschriebenen Messvorrichtungen bzw. Sensoren in einem Kombinationssensor zu vereinen.

Die Figur zeigt beispielhaft eine Mehrzahl an Sensoren und Messvorrichtungen. Es werden zur Durchführung des erfindungsgemäßen Verfahrens nicht alle genannten Sensoren und Messvorrichtungen benötigt.

FIG 3 zeigt eine weitere mögliche Ausführung des erfindungsgemäßen Systems 1.

Die Figur zeigt im Wesentlichen das in FIG 2 beschriebene System 1.

Das System 1 ist zum Datenaustausch (mit Pfeil 25 dargestellt) mit einer externen Recheneinheit 14 ausgebildet. Die Recheneinheit kann auch im Umrichter 2 integriert sein.

Die Recheneinheit weist einen Empfänger 26 zum Empfang (mit Pfeil 19 dargestellt) einer Information von einem globalen Navigationssatellitensystem 16 auf. Auf diese Weise kann zuverlässig eine Information bezüglich einer Position auf der Erdkugel und/oder bezüglich einer Höhe über dem Meeresspiegel bezogen werden.

Alternativ oder zusätzlich kann auch ein Smartphone 15 die Information bezüglich der Position auf der Erdkugel und/oder bezüglich der Höhe über dem Meeresspiegel beziehen (mit Pfeil 17 dargestellt).

Dies gelingt vorteilhaft mittels einer App. Das Smartphone 15 muss hierbei nicht dauerhaft in der Nähe des Systems 1 verbleiben. Ein Bezug der Information bezüglich der Position auf der Erdkugel und/oder bezüglich der Höhe über dem Meeresspiegel ist vorteilhaft bei einer Inbetriebnahme des Systems 1 erforderlich.

Diese Information kann anschließend an die Recheneinheit 14 übermittelt werden. Dies gelingt beispielsweise mittels einer drahtlosen bzw. kabellosen Verbindung 20.

Die in FIG 2 beschriebenen Sensoren und Messvorrichtungen können auch im in FIG 3 dargestellten System 1 vorhanden sein.

Die Vorrichtung zur Luftdruckbestimmung kann somit einerseits eine Messvorrichtung sein, die den Umgebungsluftdruck direkt bestimmt, z. B. ein Barometer. Die Vorrichtung zur Luftdruckbestimmung kann jedoch auch ein Gerät sein, welches die Höhenlage bestimmt, insbesondere mittels Satelliteninformationen, und daraus - sozusagen indirekt - den Umgebungsluftdruck bestimmt.

FIG 4 zeigt eine beispielhafte Belastungskurve.

Die x-Achse zeigt eine Aufstellhöhe h in Metern m der elektrischen Maschine über dem Meeresspiegel.

Auf der y-Achse ist ein zulässiger Dauerstrom in % des Nennstroms dargestellt sowie ein Derating-Faktor k_{I}, welcher Aufschluss über eine Reduzierung der Leistung der elektrischen Maschine gibt.

Die Belastungskurve zeigt, dass ab einer Aufstellhöhe von 2000 m MSL eine Reduktion des zulässigen Dauerstroms erfolgt, insbesondere um eine ausreichende Kühlung der Maschine zu gewährleisten und so einen Schaden an der Maschine zu vermeiden.

## Patentansprüche

1. Verfahren zur Steuerung einer elektrischen Maschine (3), insbesondere dynamoelektrischen Maschine, mit folgenden Schritten:
- Ermitteln eines Umgebungsluftdrucks der elektrischen Maschine (3) mittels einer Vorrichtung zur Luftdruckbestimmung (11, 15),
- Anpassen einer Leistung der elektrischen Maschine (3) in Abhängigkeit des Umgebungsluftdrucks.

2. Verfahren nach Anspruch 1, wobei der Umgebungsluftdruck durch Ermittlung einer Höhenlage bestimmt wird.

3. Verfahren nach Anspruch 2, wobei die Höhenlage mittels eines Höhenmessers oder durch ein globales Navigationssatellitensystem (16) bestimmt wird.

4. Verfahren nach einem der vorhergehenden Ansprüche, wobei der Umgebungsluftdruck gemessen wird, insbesondere mittels eines Barometers.

5. Verfahren nach einem der vorhergehenden Ansprüche, wobei eine Umgebungsluftströmung ermittelt wird.

6. Verfahren nach einem der vorhergehenden Ansprüche, wobei eine Umgebungsluftfeuchtigkeit ermittelt wird.

7. Verfahren nach einem der vorhergehenden Ansprüche, wobei eine Umgebungstemperatur ermittelt wird.

8. Verfahren nach einem der vorhergehenden Ansprüche, wobei die Leistung der elektrischen Maschine (3) abhängig vom Umgebungsluftdruck und/oder von der Umgebungsluftströmung und/oder von der Umgebungsluftfeuchtigkeit und/oder von der Umgebungstemperatur angepasst wird.

9. Verfahren nach einem der vorhergehenden Ansprüche, wobei eine Leistung der elektrischen Maschine (3) in Abhängigkeit des Umgebungsluftdrucks und/oder der Umgebungsluftströmung und/oder der Umgebungsluftfeuchtigkeit und/oder der Umgebungstemperatur reduziert wird.

10. System (1) zur Steuerung einer elektrischen Maschine (3), insbesondere dynamoelektrischen Maschine, insbesondere zur Durchführung eines Verfahrens nach einem der Ansprüche 1 bis 9, aufweisend:
- eine elektrische Maschine (3), insbesondere dynamoelektrische Maschine,
- eine Vorrichtung zur Luftdruckbestimmung,
- eine Funktion zur Anpassung einer Leistung der elektrischen Maschine (3).

11. System (1) nach Anspruch 10, aufweisend einen Höhenmesser (100) .

12. System (1) nach einem der Ansprüche 10 oder 11, aufweisend einen Empfänger (15, 26) zum Empfang einer Information von einem globalen Navigationssatellitensystem (16).

13. System (1) nach einem der Ansprüche 10 bis 12, aufweisend eine Messvorrichtung (11) zur Messung des Umgebungsluftdrucks.

14. System (1) nach einem der Ansprüche 10 bis 13, aufweisend eine Messvorrichtung (22) zur Messung einer Umgebungsluftströmung.

15. System (1) nach einem der Ansprüche 10 bis 14, aufweisend eine Messvorrichtung (13) zur Messung einer Umgebungsluftfeuchtigkeit.

16. System (1) nach einem der Ansprüche 10 bis 15, aufweisend eine Messvorrichtung (23) zur Messung einer Umgebungstemperatur.

17. System (1) nach einem der Ansprüche 13 bis 16, wobei die Messvorrichtung (11) zur Messung eines Umgebungsluftdrucks und/oder die Messvorrichtung (22) zur Messung einer Umgebungsluftströmung und/oder die Messvorrichtung (13) zur Messung einer Umgebungsluftfeuchtigkeit und/oder die Messvorrichtung (23) zur Messung einer Umgebungstemperatur wenigstens einen MEMS-Baustein aufweist.
